**Europäisches Patentamt**

**European Patent Office**

**Office européen des brevets**

(11) Veröffentlichungsnummer: **0 500 821 B1**

(12) **EUROPÄISCHE PATENTSCHRIFT**

(45) Veröffentlichungstag der Patentschrift: **24.08.94**

(51) Int. Cl.⁵: **B62M 11/16**, B62M 23/02

(21) Anmeldenummer: **91910285.5**

(22) Anmeldetag: **10.06.91**

(86) Internationale Anmeldenummer:
**PCT/CH91/00128**

(87) Internationale Veröffentlichungsnummer:
**WO 91/19637 (26.12.91 91/29)**

(54) **PLANETENGETRIEBE FÜR HYBRIDFAHRZEUGE.**

(30) Priorität: **21.06.90 CH 2074/90**

(43) Veröffentlichungstag der Anmeldung:
**02.09.92 Patentblatt 92/36**

(45) Bekanntmachung des Hinweises auf die
Patenterteilung:
**24.08.94 Patentblatt 94/34**

(84) Benannte Vertragsstaaten:
**AT BE CH DE DK ES FR GB IT LI NL SE**

(56) Entgegenhaltungen:
**DE-C- 0 848 016**
**FR-A- 0 332 571**
**NL-A- 7 611 405**

(73) Patentinhaber: **KUTTER, Michael**
**Thiersteinerrain 145**
**CH-4059 Basel (CH)**

(72) Erfinder: **KUTTER, Michael**
**Thiersteinerrain 145**
**CH-4059 Basel (CH)**

(74) Vertreter: **Feldmann, Clarence Paul**
**c/o Patentanwaltsbüro FELDMANN AG**
**Postfach**
**Kanalstrasse 17**
**CH-8152 Glattbrugg (CH)**

**Beschreibung**

Die vorliegede Erfindung betrifft ein Planetengetriebe für ein Hybridfahrzeug mit einem gemischten Antrieb mittels Muskelkraft und Hilfsmotor, indem der Hilfsmotor das Sonnenrad treibt und die Muskelkraft auf das Universum wirkt.

Ein Hybridfahrzeug mit einem solchen Planetengetriebe ist aus der NL-A-7'611'405 bekannt. Hier treibt der Hilfsmotor das Sonnenrad und die Muskelkraft wirkt auf das Universum. Der Abtrieb geschieht über den Aussenring mit Innenverzahnung, das Universum. Ein solches Getriebe arbeitet selbstverständlich mit einem variablen Uebersetzungsverhältnis. Obwohl Planetengetriebe bereits seit vielen Jahrzehnten bekannt sind und auch die Verwendung für Hybridfahrzeuge bereits vor mehr als 10 Jahren publiziert worden ist, hat sich diese Lösung nicht durchgesetzt. Studien haben gezeigt, dass zwei wesentliche Gründe gegen diese beschriebene Anordnung gemäss der NL-A-7'611'405 sprechen. Bei jener Anordnung erfolgt der Tretantrieb über den Planetenträger und der Abtrieb über das Hohlrad mit Innenverzahnung, dem Universum mit gleicher Drehrichtung. Der Motorantrieb auf das Sonnenrad erfolgt in gegenläufiger Drehrichtung. Die Folge davon ist, dass bei steigender Tourenzahl des Motors auch der Wälzverlust des Getriebes zunimmt. Ein weiterer nachteiliger Punkt besteht darin, dass die Zuschaltung eines Vorschaltgetriebes für die Muskel kraft sich relativ schlecht mit dem bekannten Planetengetriebe kombinieren lässt. Entsprechend ist die Gesamtkonstruktion relativ platzaufwendig. Es ist folglich die Aufgabe der vorliegenden Erfindung, ein Getriebe für Hybridfahrzeuge, der eingangs genannten Art zu schaffen, bei der die Wälzverluste verringert werden können und insbesondere bei einer üblichen Reisegeschwindigkeit annähernd völlig verschwinden. Die in einem Planetengetriebe auftretenden Verluste sind allein auf die Wälzleistung zurückzuführen, die durch Abwälzen der Zahnräder übertragen wird. Die Verlustleistung verhält sich somit proportional zum durch Wälzleistung übertragenen Leistungsanteil.

Diese Aufgabe erfüllt ein Planetengetriebe für ein Hybridfahrzeug mit einem gemischten Antrieb mittels Muskelkraft und Hilfsmotor dadurch, dass der Hilfsmotor das Sonnenrad treibt und die Muskelkraft auf das Universum wirkt, während der Abtrieb auf das zu treibende Rad des Hybridfahrzeuges über den Planetenträger erfolgt.

Es ist eine Besonderheit der erfindungsgemässen Verwendung eines Planetengetriebes in durch Muskelkraft unterstützten Hybridfahrzeugen, dass Sonnenrad, Planetenträger und Universum immer im gleichen Umlaufsinn drehen. Dadurch wird in allen Betriebszuständen die Wälzleistung gegenüber anderen, bekannten Anwendungen, bei denen immer 2 Elemente gegenläufig treiben, wesentlich verringert. Je näher die beiden Antriebsquellen, Muskelkraft und Hilfsmotor dem idealen Verhältnis treiben, desto weniger Leistung wird durch Wälzleistung übertragen. Im Idealfall laufen Sonnenrad, Planetenträger und Universum syncrhon und die ganze Leistung kann verlustfrei über Kupplungsleistung übertragen werden.

Eine besonders bevorzugte Ausführung des Planetengetriebes erhält man, wenn man das Getriebe auf einer zentralen Nabe mit einem zentrischen Flansch anordnet, wobei das Sonnenrad drehbar auf der Nabe gelagert ist, während der Planetenträger fest mit dem zentrischen Flansch der Nabe und mit einem Befestigungsring für das Fahrzeugrad verschraubt ist, und dass das Universum von einer auf der Nabe drehbar gelagerten Glocke gebildet ist, die eine Innenverzahnung aufweist, die mit den Planetenrädern kämmt, und dass auf der Glocke ein Kettenwechselgetriebe angeordnet ist, welches mit der als Universum dienenden Glocke in Wirkverbindung steht. Das Planetengetriebe ist besonders vorteilhaft ausgelegt, wenn das Sonnenrad und die Planetenräder dieselben Durchmesser und Zähnezahl aufweist.

Bei dem dem Planetengetriebe vorgeschalteten Kettenwechselgetriebe handelt es sich vorzugsweise, um einen handelsüblichen Kettenwechsler. Mit Hilfe dieses Getriebes kann in jeder Geländesituation das anfallende Reaktionsmoment aufgefangen werden. Gleichzeitig wird durch die Verwendung von handelsüblichen Kettenwechslern erreicht, dass der Fahrer - mit diesen bestens vertraut - instinktiv deren Uebersetzung dem Gelände oder seinen Wünschen anpasst und damit automatisch ein den Erfordernisssen und dem Reaktionsmoment entsprechendes Drehzahl-Drehmoment-Verhältnis am Universum einbringt. Es treibt den Universum durch Wahl einer kleinen Uebersetzung am Berg mit niedriger Drehzahl, respektive durch Wahl einer grossen Uebersetzung in der Ebene mit hoher Drehzahl. Durch die unterschiedlichen Drehzahlen am Aussenring ergeben sich verschiedene Uebersetzungsverhältnisse zwischen Hilfsmotor und Antriebsrad des Fahrzeuges.

Das heisst in Abhängigkeit der Drehzahl des Universums wird eine stufenlose variable Drehzahlverwandlung zwischen Hilfsmotor und Abtrieb erreicht, die durch instinktiv angepasstes Treten und Bedienen der Fahrradschaltung stets dem Gelände optimal angepasst ist. Dadurch kann der vorzugsweise elektrische Hilfsmotor immer im Bereich des optimalen Wirkungsgrades betrieben werden.

Weitere vorteilhafte Ausführungsvarianten des Erfindungsgegenstandes gehen aus den abhängigen Patentansprüchen hervor und diese sind in der nachfolgenden Beschreibung unter Verwendung der beiliegenden Zeichnungen erläutert.

Es zeigt:

Figur 1  einen Querschnitt durch ein, im Detail dargestelltes, erfindungsgemässes Getriebe;

Figur 2  eine Diagrammdarstellung der Uebersetzungsverhältnisse;

Figur 3 bis 5  drei schematische Darstellungen verschiedener Schaltzustände des Planetengetriebes.

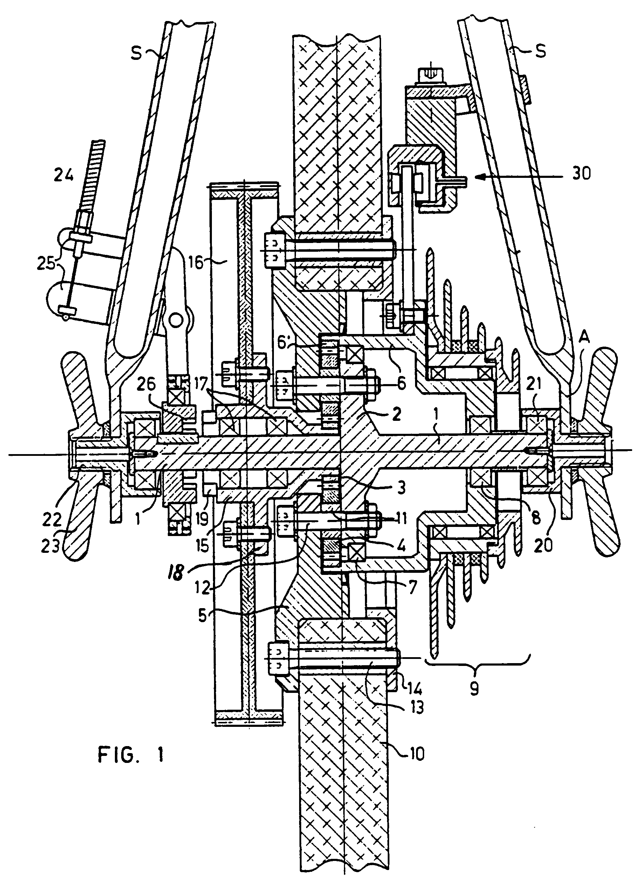

Das Ausführungsbeispiel gemäss Figur 1 zeigt die Anordnung des erfindungsgemässen Getriebes, bei einem Fahrrad mit Hilfsmotor. Das spezielle Rad mit Getriebe wird als Einheit direkt in einem Fahrradrahmen eingesetzt. Vom Fahrradrahmen sind die beiden hinteren Streben S ersichtlich, die in die Ausfallenden A münden. Jn jedes Ausfallende A wird je ein Aufnahmemaul geschraubt, in welchem je ein Nabenende direkt oder mittelbar gelagert ist. Die Nabe 1 durchsetzt das gesamte Getriebe und bildet dessen zentrale Achse. Diese zentrale Nabe 1, die gleichzeitig die Nabe des Fahrrades ist, hat einen zentrischen Flansch 2. Mindestens einseitig ist der Flansch 2 im Uebergangsbereich zur zentralen Nabe 1 verstärkt. An der flachen Seite des zentrischen Flansches 2 anliegend ist das Sonnenrad 3 drehbar auf der zentralen Nabe 1 gelagert. Gleichmässig um das Sonnenrad 3 sind mehrere, mindestens drei Planetenräder 4 verteilt. Die Planetenräder 4 lagern auf Buchsen 11, die mittels Schrauben 12 einerseits mit dem Flansch 2 der zentralen Nabe 1 und andererseits mit dem Planetenträger 5 fest verbunden sind. Der Planetenträger 5 ist ein Befestigungsring, auf dem das Antriebsrad des Hybridfahrzeuges im vorliegenden Fall ein Scheibenrad 10 mit Radschrauben 13 montiert ist. Das Scheibenrad 10 wird folglich mittels den Schrauben 13 und einem im Querschnitt L-förmigen Gegenring 14 an den Planetenträger 5 geklemmt.

Von der verstärkten Seite des zentrischen Flansches 2 her, ist über die Nabe 1 eine Glocke 6 geschoben, die den zentrischen Flansch 2 übergreift und auf denselben mittels einem Kugellager 7 und auf der Nabe 1 mittels einem Kugellager 8 drehbar gelagert ist. Die Glocke 6 hat an ihrem periphen Ende eine Innenverzahnung 6', welche mit den Planetenrädern 4 kämmt. Die Glocke 6, die das Universum des Planetengetriebes bildet, verjüngt sich vom zentrischen Flansch 2 nach aussen hin stufenförmig. Auf der äusseren Stufe der Glocke 6 sind mehrere Zahnkränze 9 eines handelsüblichen Kettenwechselgetriebes gelagert. Ueber diese Kettenräder 9 wird mittels Muskelkraft die Glocke 6 respektive, das Universum des Planetengetriebes angetrieben.

Das Sonnenrad 3, welches an der zentrischen Seite des zentrischen Flansches 2 anliegt, sitzt mit Presssitz auf einer Schale 15 und ist nach aussen stufenförmig erweitert ist. Im erweiterten Bereich ist die Schale 15 mit zwei axialen Lagern 17 auf der Nabe 1 gelagert. Auch die Schale 15 hat einen nach aussen gerichteten Flansch 18, an dem ein Zahnriemenrad 16 angeschraubt ist. Dieses Rad 16 wird über eine Zahnriementransmission von einem Hilfsmotor angetrieben. Beim Hilfsmotor handelt es sich üblicherweise um einen Elektromotor. Dieser ist jedoch ein handelsüblicher Motor, der nicht näher beschrieben werden muss und in der Zeichnung auch nicht dargestellt ist. Die auf der Nabe 1 drehbar gelagerte Schale 15 ist stirnseitig mit axial nach aussen gerichteten Zähnen 19 versehen.

Die Nabe 1 ist in den Ausfallenden A der Streben S mittelbar gelagert. Die Nabe 1 liegt in Lagerschalen 20 und ist über die Radiallager 21 gestützt. Ein zentrischer Gewindezapfen 22 an der Lagerschale 20 liegt im Ausfallende A des Fahrradrahmens und mittels Flügelmutter 23 ist die Lagerschale 20 und damit mittelbar die Nabe 1 beziehungsweise das Scheibenrad 10 im Fahrradrahmen gehalten.

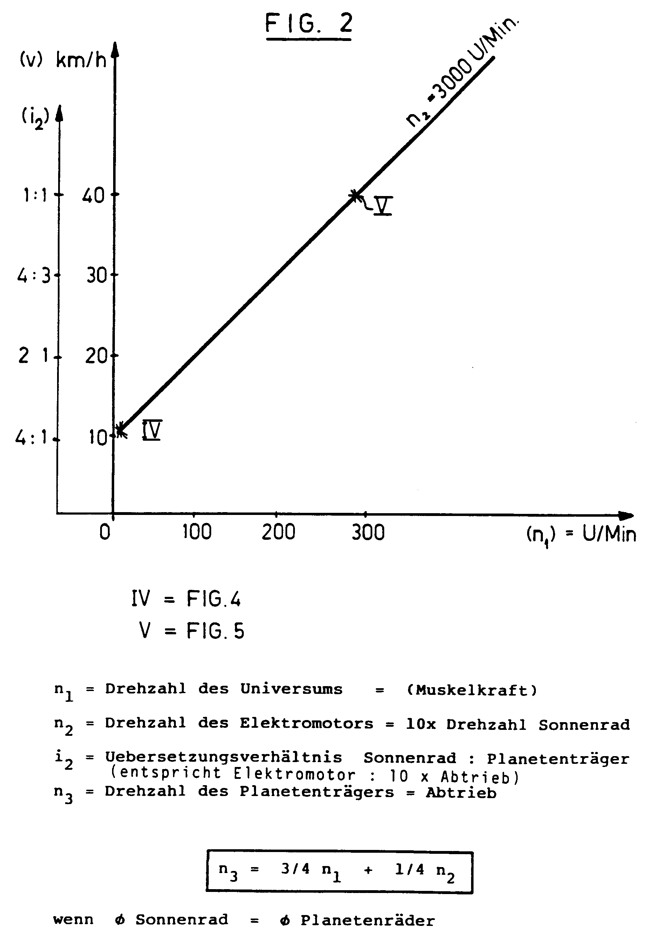

In der Figur 2 ist ein Diagramm gezeigt, welches die Uebersetzungsverhältnisse darstellt unter der Annahme einer kontinuierlichen Drehzahl des Elektromotores von 3000 Umdrehungen pro Minute. Auf der Ordinate ist die variierende, durch Muskel kraft über das Unviversum übertragene Drehzahl $n_1$ aufgetragen, während auf der Abzisse einerseits die Fahrtgeschwindikeit in km/pro Stunde und andererseits das Uebersetzungsverhältnis von Sonnenrad zu Planetenträger aufgetragen ist. Vom Zahnriemenritzel des Elektromotores zum Zahnriemenrad 16, welches mit dem Sonnenrad 3 verbunden ist, soll hier ein Untersetzungsverhältnis von 1 zu 10 herrschen. Wählt man, was sich als besonders vorteilhaft erwiesen hat, den Durchmesser des Sonnenrades gleich dem Durchmesser der Planetenräder, so erhält man für das Drehzahlverhältnis folgende Formel:

$$n_3 = 3/4\, n_1 + 1/4\, n_2.$$

Hierbei bedeutet:

$n_1 =$  Drehzahl des durch Muskelkraft getriebenen Universums;

$n_2 =$  Drehzahl des durch den Elektromotor getriebenen Sonnenrades.

$n_3 =$  Drehzahl des Planetenträgers, was der Drehzahl des Abtriebes beziehungsweise der Drehzahl des Fahrradrades entspricht.

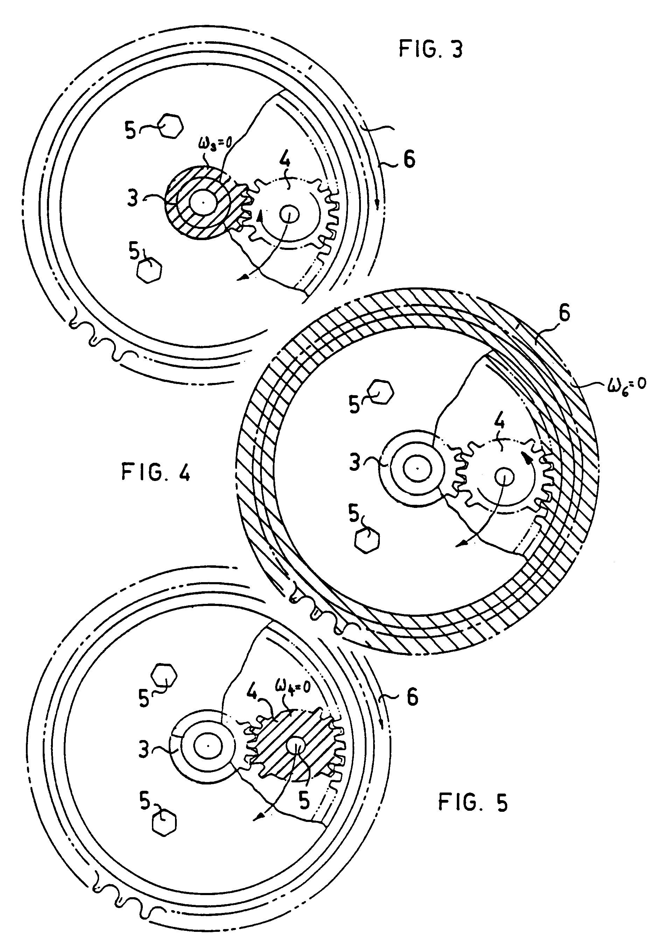

In den Figuren 3 bis 5 sind drei verschiedene Zustände dargestellt. In Figur 3 ist die Situation dargestellt des Fahrens ohne Hilfsmotor. In diesem Fall steht das Sonnenrad 3 still und das durch Muskelkraft getriebene Universum 6 dreht sich im Uhrzeigersinn um das Sonnenrad 3. Dabei werden die Planetenräder 4 ebenfalls im Uhrzeigersinn gedreht, wodurch ein Abtrieb im Planetenträger 5 ebenfalls im Uhrzeigersinn erfolgt.

Wird das Fahrzeug allein durch Muskelkraft betrieben, so stellt sich ein leichtes Untersetzungsverhältnis ein zwischen Pedalantrieb und Abtrieb (4:3). Dies wirkt sich angenehm aus, da ohne Hilfe des Motors vom Fahrer mehr geleistet werden muss, respektive langsamer gefahren wird. Treibt der Hilfsmotor wieder mehr, so lässt dieser Effekt nach, dadurch lässt sich in einem kleinen, aber angemessenen Bereich durch Regelung des Hilfsmotors eine variable Drehzahlwandlung des Tretantriebes realisieren. Wird nun die Drehzahl des Hilfsmotors in Abhängigkeit der Tretfrequenz geregelt (mittels einer kleinen Elektronik), so entfallen dadurch viele Schaltvorgänge des Tretantriebes und es ist ein äusserst bedienungsfreundliches und komfortables Fahrzeug geschaffen.

Die in Figur 4 dargestellte Situation, ist im Diagramm nach Figur 2 mit der römischen Zahl IV angegeben. Hier wird davon ausgegangen, dass keine Muskelkraft angewandt wird, was gleichbedeutend ist, mit einem Stillstand des Universums. Das Sonnenrad 3 dreht nun vom Elektromotor getrieben, im Uhrzeigersinn, während die sich nun im Universum 6 abwälzenden Planetenräder 4 im Gegenuhrzeigersinn drehen. Auf den Planetenträger 5 resultiert schliesslich wieder eine Drehbewegung im Uhrzeigersinn. Dieser Zustand entspricht annähern einer steilen Bergfahrt, wo eine kleine Uebersetzung der Fahrradschaltung (vorzugsweise Kettenwechsler) gewählt wird, so dass sich der Universum nur ganz langsam dreht.

Bei optimaler Auslegung des Getriebes, erreicht man bei der häufigsten Reisegeschwindigkeit einen Synchronlauf des ganzen Getriebes ohne Abwälzung der Planetenräder. In diesem Fall ist der Wirkungsgrad des Getriebes 100% respektive die als Verlust anzusehende Wälzleistung gleich 0. In Figur 5 ist diese Situation dargestellt. Das Sonnenrad 3 dreht mit einer vom Elektromotor bestimmten konstanten Tourenzahl im Uhrzeigersinn und das am Muskel kraft getriebene Universum 6 läuft in gleicher Richtung mit der gleichen Tourenzahl . Dadurch kommen die Planetenräder 4 zum Stillstand. Sie wälzen sich somit weder am Sonnenrad 3 noch am Universum 6 ab, folglich dreht der Planetenträger 5 ebenfalls mit derselben Geschwindigkeit wie das Sonnenrad 3 und das Universum 6. Dieser optimale Zustand wird bei Reisegeschwindigkeit erreicht und lässt sich auch fixieren. Hierzu ist eine in der Figur 1 dargestellte über einen Bowdenzug 24 und einem Hebelmechanismus 25 betätigbare Klauenkupplung 26 verschieblich auf der Nabe 1 angebracht. Die Zähne der Klauenkupplung 26 werden somit in die axialen Zähne 19 an der Schale 15 in Eingriff gebracht.

Hierdurch erfolgt eine Kupplung vom Sonnenrad 3 über die Schale 15 auf die Nabe 1 und damit auf den zentrischen Flansch 2, mit dem der Planetenträger 5 über die Schrauben 12 fest verbunden ist, der wiederum fest mit dem Scheibenrad 10 gekoppelt ist.

Mit dieser Zwangskupplung kann in einem erweiterten Bereich ohne Wälzverluste, das heisst mit einem Wirkungsgrad von annähernd 100% gefahren werden.

Bedingt durch die beiden toten Punkte in der Kreisbewegung der Tretkurbel, entstehen vor allem bei Bergfahrten leichte, periodische Drehzahlschwankungen am Kettenrad. Dadurch entstehen auch am Hilfsmotor umgekehrt proportionale, periodische Schwankungen der Drehzahl und der Leistungsabgabe. Um Drehzahl und Leistungsabgabe des Hilfsmotors zu stabilisieren und ein angenehmes Treten zu gewährleisten, wird erfindungsgemäss an der Welle mit der höchsten Drehzahl, mit Vorzug der Motorenwelle, ein Schwungrad angebracht. In der Zeichnung wurde auf die Darstellung dieser Lösung verzichtet. Die periodischen Schwankungen der Drehzahl und Leistungsabgabe können auch durch den Einsatz einer elektronischen Steuerung am Elektromotor stabilisiert werden.

Ferner lässt sich im Fall eines elektrischen Hilfsmotores einfach eine gut kontrollierbare Rekuperation realisieren. Eine dazu notwendige Bremsvorrichtung 30 ist an der Strebe S montiert. Mit ihr lässt sich die Muskel kraft getriebene Seite des Planetengetriebes dosiert abbremsen, so dass dadurch, während der Talfahrt und bei Bremsmanövern der Hilfsmotor auf ein Mehrfaches der Drehzahl des Abtriebes gebracht wird. Sind die Durchmesser des Sonnenrades und der Planetenräder gleich, so kann eine vierfache Drehzahl des Abtriebes am Sonnenrad erreicht werden. Der Hilfsmotor kann folglich schon bei kleinen Fahrgeschwindigkeiten durch die Bremsenergie über seine Leerlaufdrehzahl gebracht werden und wirkt nun als Generator, der die Batterien mit der so erzeugten Energie speist.

Das erfindungsgemässe Getriebe lässt sich auch für ein zweispuriges Hybridfahrzeug verwenden, in dem beispielsweise zwei Personen nebeneinander oder hintereinander sitzen. Folglich bestehen zwei Antriebsmöglichkeiten mittels Muskelkraft. In diesem Falle werden auf einer Achse beziehungsweise Nabe zwei Planetengetriebe montiert. Der Hilfsmotor wirkt dann auf beide starr miteinander verbundenen Sonnenräder beider Planeten, während auf jeder ein Universum bildende Glocke, je eine Muskelkraft-Antriebseinheit wirkt. Die beiden kombinierten Planetengetriebe wirken zusätzlich wie ein Differenzialgetriebe mit automatischer Sperre und machen ein solches überflüssig.

## Patentansprüche

1. Planetengetriebe für ein Hybridfahrzeug mit einem gemischten Antrieb mittels Muskelkraft und Hilfsmotor, indem der Hilfsmotor das Sonnenrad (3) treibt und die Muskelkraft auf das Universum (6) wirkt, dadurch gekennzeichnet, dass der Abtrieb auf das zu treibende Rad (10) des Hybridfahrzeuges über den Planetenträger (5) erfolgt.

2. Planetengetriebe nach Anspruch 1, dadurch gekennzeichnet, dass das Getriebe auf einer zentralen Nabe (1) mit einem zentrischen Flansch (2) angeordnet ist, wobei das Sonnenrad (3) drehbar auf der Nabe (1) gelagert ist, während der Planetenträger (5) fest mit dem zentrischen Flansch (2) der Nabe (1) verbunden und mit einem Befestigungsring für das Fahrzeugrad (10) verschraubt ist, und dass das Universum von einer auf der Nabe (1) drehbar gelagerten Glocke (6) gebildet ist, die eine Innenverzahnung (6') aufweist, die mit den Planetenrädern (4) kämmt, und dass auf der Glocke (6) ein Kettenwechselgetriebe (9) angeordnet ist, welches mit der als Universum dienenden Glocke (6) in Wirkverbindung steht.

3. Planetengetriebe nach Anspruch 2, dadurch gekennzeichnet, dass auf der Nabe (1) eine Schale (15) gelagert ist, die anliegend am Flansch (2) der Nabe das Sonnenrad (3) trägt und sich zu einem auf der Nabe (1) gelagerten erweiterten Bereich erstreckt, auf dem ein Flansch (18) angeordnet ist, an dem ein Antriebsrad (16) des Hilfsmotors befestigt ist.

4. Planetengetriebe nach Anspruch 3, dadurch gekennzeichnet, dass auf der Nabe (1) ein Kupplungselement (26) angeordnet ist, mit dem eine Verbindung zwischen der Schale (15) und der Nabe (1), und dadurch eine feste Verbindung zwischen Sonnenrad (3) und Planetenträger (5) erstellbar ist.

5. Planetengetriebe nach Anspruch 1, wobei der Hilfsmotor ein Elektromotor ist, dadurch gekennzeichnet, dass zur Rekuperierung der Energie das Universum (6) abbremsbar (30) ist.

6. Planetengetriebe nach Anspruch 1, in einem zweispurigen Hybridfahrzeug mit zwei Antriebsmöglichkeiten mittels Muskelkraft, und dadurch gekennzeichnet, dass zwei auf einer Achse montierte Planetengetriebe vorhanden sind, wobei der Hilfsmotor beide Sonnenräder treibt, während je ein Muskelkraftantrieb auf je ein Universum wirkt und der Abtrieb auf je ein anzutreibendes Fahrzeugrad wirkt.

7. Planetengetriebe nach Anspruch 1, dadurch gekennzeichnet, dass auf der Motorenwelle ein Schwungrad angebracht ist.

8. Planetengetriebe nach Anspruch 1, dadurch gekennzeichnet, dass das Sonnenrad (3) und die Planetenräder (4) dieselben Durchmesser und Zähnezahl haben.

## Claims

1. Planetary gear for a hybrid vehicle with a mixed drive by means of muscle power and an auxiliary motor, in which the auxiliary motor drives the sun gear (3) and the muscle power acts on the universe (6), characterized in that the power take-off takes place on the wheel (10) of the hybrid vehicle which is to be driven by means of the planet carrier (5).

2. Planetary gear according to claim 1, characterized in that the gear is positioned on a central hub (1) with a central flange (2), the sun gear (3) being mounted in rotary manner on the hub (1),, whilst the planet carrier (5) is fixed to the central flange (2) of the hub (1) and is screwed with a fastening ring for the vehicle wheel (10) and that the universe is formed by a bell (6) mounted in rotary manner on the hub (1) and which has internal teeth (6') meshing with the planet wheels (4), and that on the bell (6) is placed a chain transmission (9), which is in operative connection with the bell (6) serving as the universe.

3. Planetary gear according to claim 2, characterized in that on the hub (1) is mounted a shell (15), which, engaging on the flange (2), carries the hub of the sun gear (3) and extends to a widened area mounted on the hub (1) and on which is provided a flange (18), to which is fixed a driving wheel (16) of the auxiliary motor.

4. Planetary gear according to claim 3, characterized in that on the hub (1) is provided a coupling member (26) making it possible to form a connection between the shell (15) and the hub (1) and consequently a fixed connection between the sun gear (3) and the planet carrier (5).

5. Planetary gear according to claim 1, in which the auxiliary motor is an electric motor, characterized in that the universe (6) can undergo braking (30) for energy recovery purposes.

6. Planetary gear according to claim 1, in a two-track hybrid vehicle with two driving possibilities by means of muscle power and characterized in that there are two planetary gears mounted on a shaft, the auxiliary motor driving both sun gears, whereas in each case one muscle power drive acts on each universe and the power take-off acts on in each case one vehicle wheel to be driven.

7. Planetary gear according to claim 1, characterized in that a flywheel is fitted to the main shaft

8. Planetary gear according to claim 1, characterized in that the sun gear (3) and the planet wheels (4) have the same diameter and number of teeth.

**Revendications**

1. Train planétaire pour un véhicule hybride comprenant un entraînement mixte au moyen de la force musculaire et d'un moteur auxiliaire, dans lequel le moteur auxiliaire entraîne le planétaire (3) et la force musculaire agit sur la couronne (6), caractérisé par le fait que la sortie vers la roue (10) du véhicule hybride qu'il s'agit d'entraîner a lieu par l'intermédiaire du porte-satellites (5).

2. Train planétaire selon la revendication 1, caractérisé par le fait que le train est disposé sur un moyeu central (1) pourvu d'une bride centrée (2), le planétaire (3) étant monté tournant sur le moyeu (1), cependant que le porte-satellites (5) est solidaire de la bride centrée (2) du moyeu (1) et vissé par une couronne de fixation à la roue (10) du véhicule, par le fait que la couronne est constituée par une cloche (6) qui est montée tournante sur le moyeu (1) et qui comporte une denture intérieure (6') engrenant avec les satellites (4), et par le fait qu'est montée sur la cloche (6) une transmission à dérailleur (9) en liaison fonctionnelle avec la cloche (6) qui sert de couronne.

3. Train planétaire selon la revendication 2, caractérisé par le fait qu'une coquille (15) qui porte le planétaire (3) en s'appuyant sur la bride (2) du moyeu (1) est montée sur le moyeu, et qu'elle s'étend vers une région élargie qui est montée sur le moyeu (1) et sur laquelle est disposée une bride (18) à laquelle est fixée une roue (16) d'entraînement du moteur auxiliaire.

4. Train planétaire selon la revendication 3, caractérisé par le fait qu'est disposé sur le moyeu (1) un élément d'accouplement (26) au moyen duquel peut être établie une liaison entre la coquille (15) et le moyeu (1), et, de ce fait, une liaison fixe entre le planétaire (3) et le portesatellites (5).

5. Train planétaire selon la revendication 1, dans lequel le moteur auxiliaire est un moteur électrique, caractérisé par le fait que la couronne (6) peut être freinée (30) en vue de la récupération de l'énergie.

6. Train planétaire selon la revendication 1, dans un véhicule hybride à deux voies comprenant deux possibilités d'entraînement au moyen de la force musculaire, caractérisé par le fait qu'il existe deux trains planétaires montés sur un axe, le moteur auxiliaire entraînant les deux planétaires, cependant qu'un entraînement par la force musculaire agit à chaque fois sur chaque couronne et que la sortie agit à chaque fois sur une roue du véhicule à entraîner.

7. Train planétaire selon la revendication 1, caractérisé par le fait qu'un volant d'inertie est monté sur l'arbre du moteur.

8. Train planétaire selon la revendication 1, caractérisé par le fait que le planétaire (3) et les satellites (4) présentent le même diamètre et le même nombre de dents.

FIG. 1

## F I G. 2

IV = FIG. 4

V = FIG. 5

$n_1$ = Drehzahl des Universums = (Muskelkraft)

$n_2$ = Drehzahl des Elektromotors = 10x Drehzahl Sonnenrad

$i_2$ = Uebersetzungsverhältnis Sonnenrad : Planetenträger
(entspricht Elektromotor : 10 x Abtrieb)

$n_3$ = Drehzahl des Planetenträgers = Abtrieb

$$n_3 = 3/4 \ n_1 + 1/4 \ n_2$$

wenn ⌀ Sonnenrad = ⌀ Planetenräder

8

FIG. 3

FIG. 4

FIG. 5